# EUROPÄISCHE PATENTSCHRIFT

(11) **EP 3 220 244 B1**
(45) Veröffentlichungstag und Bekanntmachung des Hinweises auf die Patenterteilung: **17.06.2020**
(21) Anmeldenummer: 17156646.6
(22) Anmeldetag: 17.02.2017
(51) Int. Cl.: G06F 3/041

(54) **TOUCHSCREEN**
TOUCH SCREEN
ÉCRAN TACTILE

(30) Priorität: 17.03.2016 AT 502252016
(43) Veröffentlichungstag der Anmeldung: 20.09.2017
(73) Patentinhaber: B&R Industrial Automation GmbH, 5142 Eggelsberg (AT)
(72) Erfinder: Schuster, Günter, 5282 Ranshofen (AT)
(74) Vertreter: Patentanwälte Pinter & Weiss OG

(56) Entgegenhaltungen:
- DE-A1- 10 055 673
- DE-A1-102009 018 955
- DE-A1-102011 013 599
- DE-A1-102012 020 168
- US-A1- 2008 246 735

## Beschreibung

Die Erfindung betrifft einen Touchscreen mit einer Bildgeberschicht, einer Sensorschicht und einer Berührschicht, die eine Außenoberfläche und eine Innenoberfläche aufweist, wobei die Sensorschicht auf Seiten der Innenoberfläche der Berührschicht angeordnet ist und wobei bei einem Berühren der Außenoberfläche mit einem Berührorgan die Berührung von der Sensorschicht durch die Dicke der Berührschicht hindurch messbar und auswertbar ist. Weiters betrifft die Erfindung ein Bedienpaneel für eine Maschinensteuerung.

Touchscreens kommen in zunehmenden Maß für Bedienpaneele für die Maschinensteuerung zum Einsatz. Dies wird insbesondere durch die Entwicklung von sogenannten projiziert-kapazitativen Touchscreens (oder PCAP-Touchscreens) möglich, da diese mit einem dicken und stabilen Frontglas gebaut werden können, das auch für einen Einsatz in industriellen Umgebungen geeignet ist und die sensible Elektronik der Bedienpaneele schützt. Praktisch ist die Dicke des Frontglases aufgrund der Empfindlichkeit der herkömmlicher Weise verwendeten PCAP-Sensorschichten auf maximal etwa 5-6 mm beschränkt, es wurden jedoch bereits Sensorschichten entwickelt, die sogar Glasdicken von bis zu 20 mm bewältigen können.

Vorteilhaft bei der Verwendung von Touchscreens für Bedienpaneele ist deren flexible Verwendbarkeit, da die Art und die Anordnung der Schalt- und/oder Anzeigeelemente auf dem Touchscreen praktisch beliebig gestaltbar sind. Als Nachteilig haben sich in der Praxis jedoch die fehlenden haptischen Eigenschaften herausgestellt, da die Außenoberfläche der Berührschicht glatt und eben ist. Die Berührschicht besteht im Allgemeinen aus Glas oder einem vergleichbaren durchsichtigen Material, das keinerlei haptische Erkennungsmerkmale aufweist.

DE 10 2009 018955 A1 offenbart einen Touchscreen, der teilweise von einer Maske überdeckt ist. Die Maske weist Aussparungen auf, die eine geführte Bedienung des Touchscreens nur in den Bereichen der Aussparung ermöglichen und eine Bedienung des Touchscreens im Bereich der Maske verhindern.

DE 20 2012 020168 A1 offenbart ein Touchpad mit einer Berührfläche aus Porzellan. Definierte Eingabebereiche des Touchpads werden durch konturierte Erhebungen haptisch fühlbar voneinander abgegrenzt.

DE 100 55 673 A1 offenbart eine Bedienvorrichtung für ein KFZ. Die Oberfläche der Bedienvorrichtung ist mit haptisch fühlbaren Konturen ausgebildet. Die Bedienvorrichtung kann als Touch-Pad ausgebildet sein, das von einer Anzeige beabstandet angeordnet ist.

US 2008/0246735 A1 offenbart einen kapazitiven Berührungssensor mit einer Aufnahme für einen Finger, in der Elemente für eine taktile Rückkopplung der Berührung angeordnet sind.

DE 10 2011 013 599 A1 offenbart ein Anzeigenbedienfeld für ein Fahrzeug. In einem von der Anzeige getrennten Bedienfeld ist eine Oberflächenvariationsvorrichtung vorgesehen, mit der eine Oberflächenstruktur selektiv änderbar ist, um haptisch fühlbare Strukturen auf dem Bedienfeld zu schaffen.

Der gegenständlichen Erfindung liegt die Aufgabe zugrunde, einen Touchscreen der eingangs genannten Art, insbesondere einen projiziert-kapazitativen Touchscreen bereitzustellen, der die Nachteile des Standes der Technik überwindet, und eine haptische Bedienbarkeit ermöglicht, ohne die Vorteile der flexiblen Gestaltbarkeit der Benutzeroberfläche, beispielsweise in einem Bedienpaneel, wesentlich zu beeinträchtigen.

Dieses und weitere Ziele werden von einem Touchscreen der eingangs genannten Art erreicht, bei dem aus der Außenoberfläche der Berührschicht im Bereich der Sensorschicht und der Bildgeberschicht zumindest eine Führungsbahn für das Berührorgan aus der Berührschicht herausgearbeitet ist. Für die Sensorschicht und/oder die Bildgeberschicht können bekannte PCAP-Touchsensoren bzw. Displays beliebiger Hersteller verwendet werden. Der PCAP-Touchsensor kann in herkömmlicher Weise von einem Touchcontroller ausgewertet und die Daten in einer Recheneinheit weiter bearbeitet werden.

Da als Berührorgan meist ein menschlicher Finger verwendet wird, haben sich hinsichtlich der Bedienbarkeit für die Führungsbahn eine Breite zwischen 0,7 cm und 2 cm, vorzugsweise zwischen 1 cm und 1,5 cm und besonders bevorzugt zwischen 1,2 cm und 1,3 cm und eine maximale Tiefe zwischen 0,5 mm und 1 mm, vorzugsweise zwischen 0,7 mm und 0,9 mm als besonders vorteilhaft erwiesen, da dies den meisten ergonomischen Bedingungen entgegenkommt.

In vorteilhafter Weise kann die Dicke der Berührschicht 3 mm oder mehr betragen. Dies erlaubt die Herstellung hochgradig stabiler und unempfindlicher Touchscreens, wobei auch in den Bereichen, in denen die Dicke der Berührschicht durch Führungsbahnen eingeschränkt ist, eine ausreichende Stabilität gewährleistet ist. Als Material kann für die Berührschicht eine herkömmliche Frontglasscheibe verwendet werden, die vorzugsweise vollflächig mit der Sensorschicht optisch verklebt ist. Die Führungsbahnen sind auf Seiten der Außenoberfläche in die Frontglasscheibe eingeschliffen.

In einer vorteilhaften Ausführungsform kann die Führungsbahn einen kreisrunden oder ovalen Verlauf aufweisen, wobei der maximale Außendurchmesser der runden bzw. ovalen Führungsbahn den Abmessungen eines mit einem oder zwei Fingern betätigbaren Drehrads entspricht. Dies erfordert eine minimale Umstellung für einen Benutzer, der herkömmliche Drehräder gewohnt ist. Eine geringfügig ovale Gestaltung der Führungsbahn kann in Verbindung mit einer dreidimensionalen Darstellung des Drehrades den Optischen Eindruck und die Bedienbarkeit verbessern.

Bevorzugter Weise kann in einer weiteren vorteilhaften Ausgestaltung der Erfindung in der Führungsbahn zumindest teilweise eine haptisch fühlbare Oberflächenstruktur angeordnet sein. Dadurch ergibt sich für den Benutzer ein haptisches Feedback bei der Benutzung des der Führungsbahn zugeordneten Schaltelements. Beispielsweise kann die Oberflächenstruktur in der Führungsbahn teilweise oder vollständig matt ausgebildet bzw. geätzt sein, oder beispielsweise Querrillen oder flächige Strukturmuster aufweisen, was neben der haptischen Fühlbarkeit auch ein optisches Gestaltungsmerkmal darstellt.

In einer weiteren vorteilhaften Ausführungsform der Erfindung kann die Berührschicht an ihrer Innenoberfläche partiell hinterdruckt sein. Dies erlaubt die Herstellung von Touchscreens mit teilweise unveränderlichen Gestaltungsmerkmalen (in den bedruckten Bereichen), die dann durch variable Bereiche ergänzt werden können, in denen die Darstellung durch die Bildgeberschicht definiert ist.

Die Erfindung betrifft weiters ein Bedienpaneel für eine Maschinensteuerung, wobei das Bedienpaneel als Benutzeroberfläche einen Touchscreen der oben beschriebenen Art aufweist.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1 eine schematische Schnittansicht durch einen erfindungsgemäßen Touchscreen,
Fig. 2 eine schaubildliche Darstellung eines teilweise geschnitten dargestellten Touchscreens, und
Fig. 3 ein Bedienpaneel für eine Maschinensteuerung.

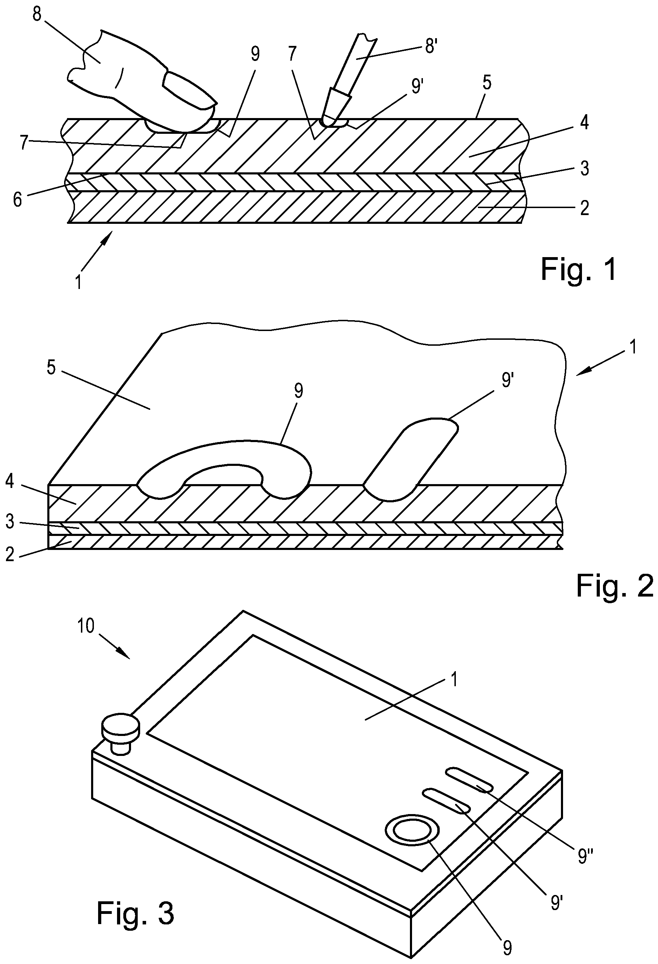

Fig. 1 zeigt die wesentlichen Elemente eines erfindungsgemäßen Touchscreens 1, der als projiziert-kapazitativer Touchscreen ausgebildet ist. Der Schichtaufbau eines solchen Touchscreens 1 weist zumindest eine Berührschicht 4, eine Sensorschicht 3 und eine Bildgeberschicht 2 auf. Es ist im Fachbereich bekannt, dass auch weitere Schichten in dem Aufbau enthalten sein können, etwa Polarisierungs- oder Filterschichten. Solche Schichten können auch im erfindungsgemäßen Touchscreen Verwendung finden, sie sind jedoch der Einfachheit halber in Fig. 1 nicht dargestellt. Auch auf die Darstellung weiterer allgemein bekannter Gestaltungs- und Montageelemente, wie etwa Halterahmen, Gehäuse, Befestigungselemente oder Kleberschichten wurde aus Gründen der Übersichtlichkeit verzichtet. Solche Elemente sind dem Fachmann jedoch ohne weiteres bekannt.

Die Berührschicht 4 ist die äußerste Schicht des Touchscreens 1 und sie besteht im Allgemeinen aus gehärtetem und besonders bruchfestem Spezialglas. Bei der Verwendung mit mobilen Geräten, bei denen das Gewicht eine besondere Rolle spielt, wird die Berührschicht meist so dünn wie möglich ausgeführt, beispielsweise zwischen 0,5 und 0,7 mm, wodurch diese Touchscreens oft eine beträchtliche Bruchneigung haben. Für industrielle Anwendungen, etwa als Bedienpaneel, ist jedoch ein deutlich höherer Bruchwiderstand erforderlich, wobei das Gewicht nur dann eine wesentliche Rolle spielt, wenn das Bedienpaneel tragbar sein soll. Für fix montierte Bedienpaneele ist es bevorzugt, die Berührschicht 4 so stabil (und daher im Allgemeinen so dick) wie möglich auszuführen, wobei die maximale Dicke von den Messfähigkeiten der Sensorschicht 3 begrenzt ist.

Als projiziert-kapazitativ werden Touchscreens bezeichnet, bei denen die Berührschicht 4 eine freie Außenoberfläche 5, die von dem Berührorgan 8 berührt wird, und eine Innenoberfläche 6, die mit der Sensorschicht 3 verbunden ist, aufweist. Dies bedeutet, dass die Messung einer Berührung 7 durch ein Berührorgan 8 durch die Berührschicht 4 hindurch erfolgt. Die Berührschicht 4 wird bei der Herstellung des Touchscreens 1 im Allgemeinen flächig mit der Sensorschicht 3 verklebt, wobei ein transparenter bzw. durchsichtiger Kleber verwendet wird, um die Darstellung der unterhalb der (ebenfalls transparenten) Sensorschicht 3 angeordneten Bildgeberschicht 2 nicht zu beeinträchtigen.

Die Sensorschicht 3 besteht im Allgemeinen aus einer durchsichtigen Folie, die auf die Innenoberfläche 6 der Berührschicht 4 aufgeklebt oder laminiert ist. An der Rückseite der Sensorschicht ist die Bildgeberschicht 2 angeordnet, wobei alle üblichen Arten von Dünnschichtdisplays verwendet werden können, beispielsweise etwa TFT-, LCD- oder OLED-Bildgeberschichten.

Wie dies allgemein üblich ist, erfolgt die Benutzung des Touchscreens 1 durch Berühren 7 der Außenoberfläche 5 mit einem Berührorgan 8, üblicherweise ein (oder mehrere) Finger (Berührorgan 8 in Fig. 1) oder ein Eingabestift (Berührorgan 8' in Fig. 1). Mit dem Berührorgan 8 können einzelne, mit der Bildgeberschicht 2 angezeigte Elemente angetippt werden, was beispielsweise als Anklicken eines Schaltelements oder als Betätigen eines Druckschalters interpretiert werden kann. Die Bedienung des Touchscreens 1 kann jedoch auch komplexere Gesten, beispielsweise mit einem Finger oder mehreren Fingern, umfassen.

Für spezielle Anwendungen, etwa für Bedienpaneele für Maschinensteuerungen, kann die Innenoberfläche 6 der Berührschicht 4 bedruckt bzw. hinterdruckt sein, etwa um eine durchgängige und unveränderliche Struktur für das Bedienpaneel vorzusehen. Anstelle dieser Bedruckung kann selbstverständlich auch eine eigene Schicht mit der Bedruckung zwischen der Berührschicht 4 und der Sensorschicht 3 bzw. zwischen der Sensorschicht 3 und der Bildgeberschicht 2 angeordnet sein.

In die Außenoberfläche 5 der Berührschicht 4 sind an bestimmten Stellen Führungsbahnen 9, 9' vorgesehen. Diese Führungsbahnen 9, 9' werden bei der Herstellung vorzugsweise in die Außenoberfläche 5 eingefräst und sie weisen eine Breite und Tiefe auf, die eine Führung für das Berührorgan 8, 8' bereitstellt.

Wenn der Touchscreen mit einem Finger bedient werden soll (Berührorgan 8), haben sich eine Breite zwischen 0,7 cm und 2 cm, vorzugsweise etwa 1,2 cm - 1,3 cm, bei einer maximalen Tiefe zwischen 0,5 mm und 1 mm, vorzugsweise etwa 0,7 mm bis 0,9 mm, als vorteilhaft herausgestellt. Die Abmessungen der Führungsbahnen 9, 9' können jedoch auch für andere Berührorgane, etwa das als Eingabestift ausgeführte Berührorgan 8' in Fig. 1, optimiert werden.

In Fig. 2 sind in einer teilweise geschnittenen perspektivischen Darstellung des Touchscreens 1 zwei besonders bevorzugte Ausführungsformen der Führungsbahnen 9, 9' dargestellt, nämlich einmal mit einem kreisrunden Verlauf (Führungsbahn 9) und einmal mit einem geraden Verlauf (Führungsbahn 9').

Die gerade Führungsbahn 9' kann beispielsweise für die Implementierung von Schiebereglern verwendet werden. Die runde Führungsbahn 9 kann hingegen für die Implementierung von Drehreglern vorteilhaft verwendet werden.

Insbesondere die Integration von Drehreglern in Touchscreen-Bedienkonzepte ist hinsichtlich der Bedienbarkeit problematisch, da ohne haptische Führungshilfen eine "blinde" Betätigung des Drehreglers kaum möglich ist, ohne versehentlich den Bereich des Drehreglers zu verlassen. Aus diesem Grund werden in herkömmlichen Bedienpaneelen Drehregler immer noch als eigenes Element neben dem eigentlichen Touchscreen angeordnet. Dies hat jedoch den Nachteil, dass der Drehregler dann immer dieselbe Gestaltung aufweist und keine unterschiedliche Darstellung möglich ist.

Mithilfe des erfindungsgemäßen Konzepts lassen sich die Eigenschaften von Reglern, z.B. Dreh- oder Linearregler, beliebig gestalten und animiert darstellen, wobei lediglich die Position des Reglers auf dem Touchscreen 1 durch die Position der Führungsbahn 9 vorgegeben ist. Vorteilhaft ist auch, dass der (die) durch die Führungsbahnen 9, 9' für den (die) Linear- und/oder Drehregler vorgesehene(n) Bereich(e) für ein Steuerelement genutzt werden können, dies aber nicht zwingend erforderlich ist. Dadurch können je nach Bedienkonzept und/oder Maschinenstatus unterschiedliche Steuerungsoberflächen bereitgestellt werden, die die Führungsbahnen 9, 9' in unterschiedlicher Weise nutzen und in das Konzept integrieren können, oder auch nicht.

Fig. 3 zeigt ein beispielhaftes Bedienpaneel 10, etwa für eine Maschinensteuerung, das mit dem erfindungsgemäßen Touchscreen 1 versehen ist. Der Touchscreen 1 ist weist eine kreisrunde Führungsbahn 9 und zwei gerade Führungsbahnen 9', 9" auf. Die kreisrunde Führungsbahn 9 kann beispielsweise in Verbindung mit einem Drehregler genutzt werden und die geraden Führungsbahnen 9', 9" können dementsprechend beispielsweise für Schieberegler genutzt werden. Dazu muss lediglich die jeweilige Führungsbahn 9, 9', 9" mit einer entsprechenden Darstellung eines Schiebe- bzw. Drehreglers hinterlegt werden, und die Betätigung der Regler wird mit dem Touchscreen in bekannte Weise gemessen und ausgewertet. Ein kreisförmiges entlangfahren des Berührorgans 8 in der umlaufenden Spur der Führungsbahn 9 kann beispielsweise als "drehen" des unter dieser Führungsbahn 9 dargestellten Drehreglers interpretiert werden. Demgemäß kann ein Streichen entlang der Führungsbahnen 9', 9" als Verschieben eines Schiebereglers interpretiert werden, der demgemäß auf dem Touchscreen dargestellt werden kann. Alternativ oder zusätzlich kann die Einstellung des Dreh- bzw. Schiebereglers als Wert auf dem Touchscreen angezeigt werden, beispielsweise als Prozentangabe.

Der Fachmann kann mithilfe der Lehren aus dieser Beschreibung einen Touchscreen mit zahlreichen unterschiedlich gestalteten Führungsbahnen versehen, wobei die Anzahl, Form und Anordnung der Führungsbahnen auf der Touchscreenoberfläche gemäß den jeweiligen Vorgaben beliebig gestaltet werden kann. Neben kreisrunden, ovalen und geraden Formen können auch andere geschlossene oder offene Gestaltungen ausgeführt werden. So können etwa geschwungene, bogenförmig verlaufende, abgewinkelte und/oder wellige bzw. gezackte Führungsbahnen verwendet werden, wenn dies dem jeweiligen Zweck zuträglich ist.
Touchscreen 1
Bildgeberschicht 2
Sensorschicht 3
Berührschicht 4
Außenoberfläche 5
Innenoberfläche 6
Berührungen 7
Berührorgan 8
Führungsbahn 9
Bedienpaneel 10

## Patentansprüche

1. Touchscreen (1) mit einer Bildgeberschicht (2), einer Sensorschicht (3) und einer Berührschicht (4), die eine Außenoberfläche (5) und eine Innenoberfläche (6) aufweist, wobei die Sensorschicht (3) auf Seiten der Innenoberfläche (6) der Berührschicht (4) angeordnet ist und wobei bei einem Berühren der Außenoberfläche (5) mit einem Berührorgan (8) die Berührung (7) von der Sensorschicht (3) durch die Dicke der Berührschicht (4) hindurch messbar und auswertbar ist, **dadurch gekennzeichnet, dass** aus der Außenoberfläche (5) der Berührschicht (4) im Bereich der Sensorschicht (3) und der Bildgeberschicht (2) zumindest eine Führungsbahn (9) für das Berührorgan (8) aus der Berührschicht (4) herausgearbeitet ist.

2. Touchscreen (1) nach Anspruch 1, **dadurch gekennzeichnet, dass** die Führungsbahn (9) eine Breite zwischen 0,7 cm und 2 cm, vorzugsweise zwischen 1 cm und 1,5 cm und besonders bevorzugt zwischen 1,2 cm und 1,3 cm, und eine maximale Tiefe zwischen 0,5 mm und 1 mm, vorzugsweise zwischen 0,7 mm und 0,9 mm aufweist.

3. Touchscreen (1) nach Anspruch 1 oder 2, **dadurch gekennzeichnet, dass** die Dicke der Berührschicht (4) 3 mm oder mehr beträgt.

4. Touchscreen (1) nach einem der Ansprüche 1 bis 3 , **dadurch gekennzeichnet, dass** die Führungsbahn (9) einen kreisrunden oder ovalen Verlauf aufweist, wobei der maximale Außendurchmesser der runden bzw. ovalen Führungsbahn (9) den Abmessungen eines mit einem oder zwei Fingern betätigbaren Drehrads entspricht.

5. Touchscreen (1) nach einem der Ansprüche 1 bis 4, **dadurch gekennzeichnet, dass** in der Führungsbahn (9) zumindest teilweise eine haptisch fühlbare Oberflächenstruktur angeordnet ist.

6. Touchscreen (1) nach einem der Ansprüche 1 bis 5, **dadurch gekennzeichnet, dass** die Berührschicht (4) an ihrer Innenoberfläche (6) partiell hinterdruckt ist.

7. Bedienpaneel (10) für eine Maschinensteuerung, **dadurch gekennzeichnet, dass** das Bedienpaneel (10) als Benutzeroberfläche einen Touchscreen (1) nach einem der Ansprüche 1 bis 6 aufweist.

## Claims

1. A touchscreen (1) having an image-generating layer (2), a sensor layer (3) and a touch layer (4) which has an external surface (5) and an internal surface (6), wherein the sensor layer (3) is arranged on the side of the internal surface (6) of the touch layer (4) and wherein, when the external surface (5) is touched with a touch organ (8), the touch (7) can be measured and evaluated by the sensor layer (3) through the thickness of the touch layer (4), **characterized in that**, at least one guide track (9) for the touch organ (8) is machined out of the touch layer (4) from the external surface (5) of the touch layer (4) in the region of the sensor layer (3) and the image-generating layer (2).

2. The touchscreen (1) according to claim 1, **characterized in that** the guide track (9) has a width between 0.7 cm and 2 cm, preferably between 1 cm and 1.5 cm, and particularly preferably between 1.2 cm and 1.3 cm, and a maximum depth between 0.5 mm and 1 mm, preferably between 0.7 mm and 0.9 mm.

3. The touchscreen (1) according to claim 1 or 2, **characterized in that** the thickness of the touch layer (4) is 3 mm or more.

4. The touchscreen (1) according to one of claims 1 to 3, **characterized in that** the guide track (9) has a circular or oval progression, wherein the maximum outside diameter of the round or oval guide track (9) corresponds to the dimensions of a rotary dial which can be actuated with one or two fingers.

5. The touchscreen (1) according to one of claims 1 to 4, **characterized in that** a haptically tangible surface structure is arranged, at least in parts, in the guide track (9).

6. The touchscreen (1) according to one of claims 1 to 5, **characterized in that** the touch layer (4) is partially back-printed on its internal surface (6).

7. An operating panel (10) for a machine controller, **characterized in that** the operating panel (10) has a touchscreen (1) according to one of claims 1 to 6 as a user interface.

## Revendications

1. Écran tactile (1) comprenant une couche génératrice d'image (2), une couche de capteur (3) et une couche tactile (4), qui présente une surface extérieure (5) et une surface intérieure (6), dans lequel la couche de capteur (3) est disposée du côté de la surface intérieure (6) de la couche tactile (4), et dans lequel, lorsque la surface extérieure (5) est touchée par un élément tactile (8), le contact (7) de la couche de capteur (3) peut être mesuré et évalué à travers l'épaisseur de la couche tactile (4), **caractérisé en ce qu'**au moins une piste de guidage (9) de l'organe de contact (8) est façonnée dans la couche de contact (4) à partir de la surface extérieure (5) de la couche de contact (4) dans la zone de la couche de capteur (3) et de la couche génératrice d'image (2).

2. Écran tactile (1) selon la revendication 1, **caractérisé en ce que** la piste de guidage (9) a une largeur comprise entre 0,7 et 2 cm, de préférence entre 1 et 1,5 cm et de manière particulièrement préférée entre 1,2 et 1,3 cm, et une profondeur maximale comprise entre 0,5 et 1 mm, de préférence entre 0,7 et 0,9 mm.

3. Écran tactile (1) selon la revendication 1 ou 2, **caractérisé en ce que** l'épaisseur de la couche tactile (4) est d'au moins 3 mm.

4. Écran tactile (1) selon l'une des revendications 1 à 3, **caractérisé en ce que** la piste de guidage (9) présente une forme circulaire ou ovale, dans lequel le diamètre extérieur maximal de la piste de guidage circulaire ou ovale (9) correspond aux dimensions d'une roue rotative qui peut être actionnée par un ou deux doigts.

5. Écran tactile (1) selon l'une des revendications 1 à 4, **caractérisé en ce qu'**une structure de surface perceptible par contact tactile est disposée au moins partiellement dans la piste de guidage (9).

6. Écran tactile (1) selon l'une des revendications 1 à 5, **caractérisé en ce que** la couche tactile (4) est partiellement imprimée à l'envers sur sa surface intérieure (6).

7. Panneau de commande (10) d'une commande de machine, **caractérisé en ce que** le panneau de commande (10) présente un écran tactile (1) selon l'une des revendications 1 à 6 comme interface utilisateur.
